Europäisches Patentamt

European Patent Office

Office européen des brevets

(19)

(11) **EP 1 238 215 B1**

(12) **EUROPÄISCHE PATENTSCHRIFT**

(45) Veröffentlichungstag und Bekanntmachung des Hinweises auf die Patenterteilung:
**24.03.2004 Patentblatt 2004/13**

(21) Anmeldenummer: **00991076.1**

(22) Anmeldetag: **15.12.2000**

(51) Int Cl.⁷: **F16H 61/04**, B60K 41/06

(86) Internationale Anmeldenummer:
**PCT/DE2000/004488**

(87) Internationale Veröffentlichungsnummer:
**WO 2001/044697 (21.06.2001 Gazette 2001/25)**

(54) **KRAFTFAHRZEUGGETRIEBE MIT ZWEI SCHALTKRAFTVERLAUFSBEREICHEN**

MOTOR VEHICLE TRANSMISSION COMPRISING TWO SHIFTING FORCE GRADIENTS

TRANSMISSION D'AUTOMOBILE COMPORTANT DEUX PLAGES DE GRADIENT DE FORCE D'ENCLENCHEMENT

(84) Benannte Vertragsstaaten:
**DE FR IT**

(30) Priorität: **17.12.1999 DE 19961117**

(43) Veröffentlichungstag der Anmeldung:
**11.09.2002 Patentblatt 2002/37**

(73) Patentinhaber: **Siemens Aktiengesellschaft
80506 München (DE)**

(72) Erfinder:
• **WILD, Johann
92318 Neumarkt (DE)**
• **DEIML, Matthias
93051 Regensburg (DE)**

(56) Entgegenhaltungen:
**EP-A- 0 638 743          EP-B- 0 839 295
DE-A- 19 907 141**

EP 1 238 215 B1

**Beschreibung**

Die Erfindung betrifft ein Kraftfahrzeuggetriebe nach dem Oberbegriff von Anspruch 1. Ein solches Kraftfahrzeuggetriebe ist mit einer Getriebesteuerung versehen, mit der die Schaltvorgänge des Getriebes gesteuert werden. Durch einen Aktuator, der von der Getriebesteuerung mit variabler Kraft gesteuert wird, wird jeweils ein von der Getriebesteuerung festgelegter Getriebegang eingelegt. Der Aktuator bringt die zum Schalten erforderliche Kraft an der Schaltwelle des Getriebes auf, er kann zum Beispiel hydraulisch oder elektromechanisch betätigt werden.

Ein bekanntes Gangwechselsteuersystem weist eine Drucksteuervorrichtung auf, mit der der auf eine Schaltgabel aufgebrachte Druck variiert wird (DE 198 29 299 A1). Er wird vom Beginn des Gangwechsels an so hoch festgesetzt, dass die Schaltgabel so schnell wie möglich bis kurz vor den Synchronpunkt bewegt wird. Von dem Synchronpunkt bis zum Ende der Synchronisierung wird die Drehzahländerung eines Vorgelegerades im Getriebe konstant gehalten, wodurch der Druck gesenkt wird, um einen Verschiebestoß zu reduzieren. Unterschiedliche dynamische Fahrzustände des Kraftfahrzeugs werden dabei nicht berücksichtigt.

Wird ein Getriebegang bei Stillstand des Kraftfahrzeugs, bei Teillast oder bei niedrigen Motordrehzahlen mit großer Kraft eingelegt, so kann es im Kraftfahrzeug zu Vibrationen im Antriebsstrang und zu einer lästigen Geräuschentwicklung kommen, die möglichst vermieden werden sollten. Bei hohen Motordrehzahlen und bei einer sportlichen Fahrweise werden aber hohe Schaltkräfte benötigt, um geringe Schaltzeiten zu erreichen, d. h. um schnelle Gangwechsel durchführen zu können. Da beide Forderungen nicht gleichzeitig erfüllt werden konnten, war es bislang nötig, Kompromisse bei der Festlegung der Schaltkraft einzugehen.

Aus der Druckschrift EP 0 839 295 B1 ist ein gattungsgemäßes Kraftfahrzeuggetriebe mit einer Getriebesteuerung und einem Aktuator bekannt, bei dem die Kraft des Aktuators von Betriebszuständen des Kraftfahrzeugs abhängt. Abhängig von einem Lastfaktor wird zwischen Schaltkraftkennlinien mit niedrigen Schaltkräften und Schaltkraftkennlinien mit hohen Schaltkräften umgeschaltet.

Der Erfindung liegt die Aufgabe zugrunde, ein Kraftfahrzeuggetriebe mit einer Getriebesteuerung zu schaffen, die bei niedrigen Drehzahlen oder Motorlasten die Getriebegänge sanft einrückt und die bei hohen Drehzahlen oder leistungsbetonter Fahrweise kurze Schaltzeiten ermöglicht.

Die Aufgabe der Erfindung wird durch ein Kraftfahrzeuggetriebe nach Anspruch 1 gelöst. Dieses Getriebe weist eine Getriebesteuerung auf, die mit einer programmgesteuerten Umschalteinrichtung versehen ist, durch die in Abhängigkeit von Betriebszuständen des Kraftfahrzeugs umgeschaltet wird zwischen Schaltkraftkennlinien zum Betätigen des Aktuators mit einem Kraftverlauf, der in einem ersten Wertebereich liegt (niedriger Druck) und Schaltkraftkennlinien zum Betätigen des Aktuators mit einem Kraftverlauf, der in einem über dem ersten Wertebereich liegenden zweiten Wertebereich liegt (höherer Druck). Es können auch mehr als zwei Kraftverläufe festgelegt und zwischen diesen allen umgeschaltet werden. Im Extremfall ist auch eine stufenlose Verstellung der Schaltkraft möglich.

Zweckmäßige Weiterbildungen der Erfindung sind in den Unteransprüchen niedergelegt.

Die Vorteile der Erfindung liegen insbesondere darin, dass die konträren Forderungen an die Schaltkräfte in allen Betriebsbereichen des Kraftfahrzeugs ohne Kompromisse erfüllt werden können und dass dies mit einer einfachen programmgesteuerten Umschaltung erreicht wird. An den mechanischen und hydraulischen Bestandteilen des Kraftfahrzeuggetriebes muss praktisch nichts verändert oder ergänzt werden.

Ausführungsbeispiele der Erfindung werden im folgenden anhand der Zeichnungen erläutert. Es zeigen:

| | |
|---|---|
| Figur 1 | ein erfindungsgemäßes Kraftfahrzeuggetriebe mit Getriebesteuerung in schematischer Darstellung; |
| Figur 2 und 3 | zwei Kennfelder einer programmgesteuerten Umschalteinrichtung des Kraftfahrzeuggetriebes nach Figur 1 in einer Diagrammdarstellung; |
| Figur 4 | ein in der Getriebesteuerung nach Figur 1 abgearbeitetes Programm, als Ablaufdiagramm dargestellt; |
| Figur 5 und 6 | zwei zum Schalten des Getriebes nach Figur 1 eingesetzte Schaltkraftkennlinien. |

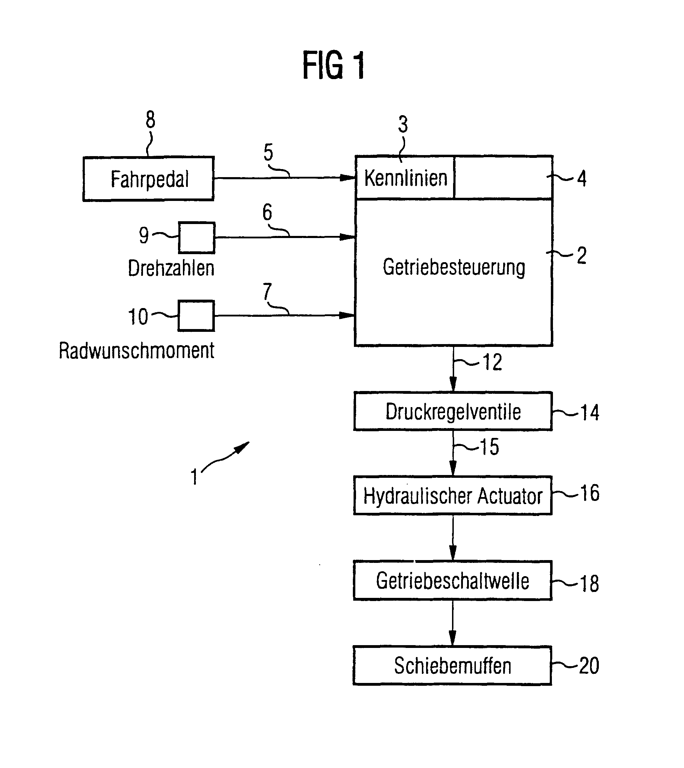

Ein Kraftfahrzeuggetriebe 1 - im folgenden auch als Getriebe bezeichnet - weist eine elektronische Getriebesteuerung 2 auf, die mit einem Kennfeld- oder Kennlinienspeicher 3 und einer programmgesteuerten Umschalteinrichtung 4 versehen ist (Figur 1). Über Signalleitungen 5 bis 7 empfängt die Getriebesteuerung 2 mehrere Eingangssignale. Das von dem Fahrer des Kraftfahrzeugs gewünschte Raddrehmoment wird von einem Fahrpedal 8 signalisiert, es kann aber vorteilhafterweise auch von einer elektronischen Motorleistungsregelung 10 (kurz: EML oder E-Gas) übermittelt werden, wenn das Kraftfahrzeug eine solche hat. Die Motordrehzahl wird von einer - hier nicht dargestellten - Motorsteuerung des Kraftfahrzeugs und die Getriebeeingangsdrehzahl von einem Drehzahlsensor 9 geliefert.

Die Funktion der Getriebesteuerung 2 und des Kennfeldspeichers 3 wird anhand der nachfolgenden Figuren erläutert. Die Getriebesteuerung 2 steuert über eine Signalleitung 12 Druckregelventile 14, die über eine Druckleitung 15 einen hydraulischen Aktuator 16 mit Druck versorgen. Der Aktuator 16 betätigt eine Getriebeschaltwelle 18, die ihrerseits Schiebemuffen 20 in dem Getriebe verschiebt und damit den jeweils von der Getriebesteuerung 2 bestimmten Gang einlegt. Die Elemente 14 bis 20 sind für sich bekannt. Sie sind in der Zeichnung nur in einem Exemplar dargestellt, tatsächlich aber in üblichen Schaltgetrieben mehrfach vorhanden.

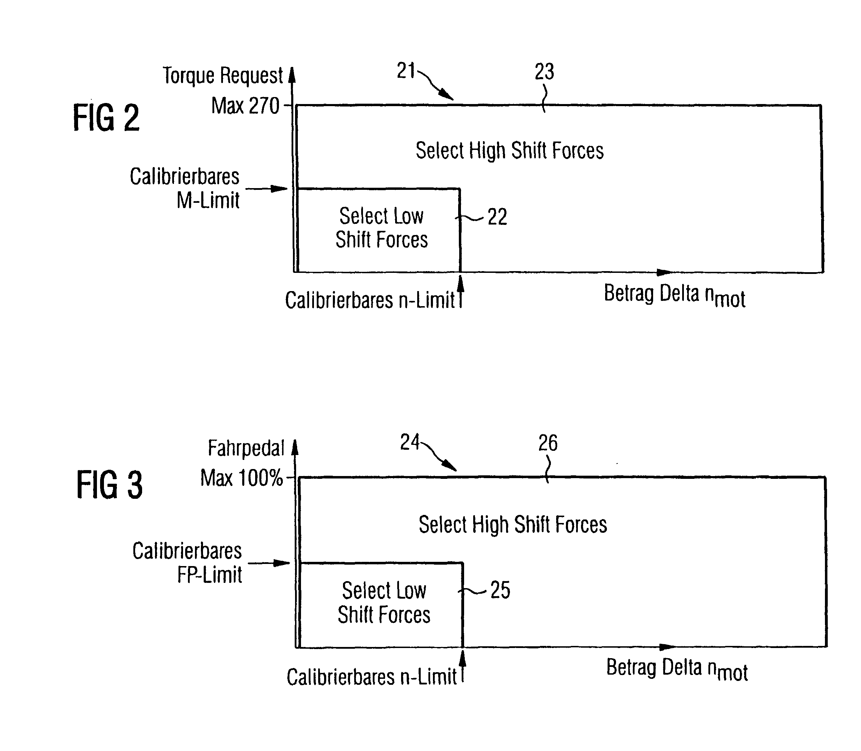

Die programmgesteuerte Umschalteinrichtung 4 - die zum Beispiel als Unterprogramm in der Getriebesteuerung 2 realisiert ist - bewirkt eine Änderung der Schaltkraft in dem Getriebe 1 oder - was gleichbedeutend damit ist - des Betätigungsdrucks des hydraulischen Aktuators 16. Die Änderung oder Umschaltung erfolgt in Abhängigkeit von dem Betriebszustand des Kraftfahrzeugs, und zwar anhand eines Kennfeldes 21, in dem die Schaltkräfte abhängig von der Motordrehzahl und dem Fahrerwunschmoment abgelegt sind (Figur 2), oder anhand eines zweiten Kennfeldes 24, in dem die Schaltkräfte abhängig von der Motordrehzahl und der Fahrpedalstellung (Figur 3) abgelegt sind.

Die Motordrehzahl ist in beiden Figuren auf der Abszisse oder x-Achse des Kennfelds als "Betrag Delta $n_{mot}$", d. h. als Betrag der Differenz der Motordrehzahl vor einer Schaltung und der Motordrehzahl nach der Schaltung, aufgetragen. Die Maßeinheit ist $U^{-1}$ (oder r.p.m.). Diese Größe berücksichtigt sowohl das absolute Drehzahlniveau als auch den gangabhängigen Drehzahlunterschied.

Auf der Ordinate oder y-Achse des Kennfelds 21 ist das Fahrerwunschmoment, d. h. das von dem Fahrer über das Fahrpedal angeforderte Raddrehmoment an der angetriebenen Achse des Kraftfahrzeugs, als Größe "torque request" (mit der Maßeinheit Nm) aufgetragen. Auf der Ordinate des Kennfelds 24 ist dieses Fahrerwunschmoment als "Fahrpedal", d. h. als Fahrpedalstellung FP in Prozent der Maximalauslenkung aufgetragen.

Die Kennfelder 21 (Figur 2) und 24 (Figur 3) weisen jeweils zwei Wertebereiche (im folgenden: Bereiche) von Schaltkräften (oder Betätigungsdrücken für den hydraulischen Aktuator 16) auf: einen ersten Bereich 22 bzw. 25, in dem niedrige Schaltkräfte ausgewählt werden, und einen zweiten Bereich 23 bzw. 26, in dem höhere Schaltkräfte ausgewählt werden. Zwischen den Bereichen 22 und 23 bzw. den Bereichen 25 und 26 wird in Abhängigkeit von Betriebszuständen des Kraftfahrzeugs umgeschaltet. Je nach der momentanen Position in dem Kennfeld werden kalibrierbare Werte für niedrige oder hohe Schaltkräfte ausgewählt. Auf die Schaltkräfte wird weiter hinten eingegangen.

Die Grenzen zwischen den Bereichen 22 und 23 auf beiden Koordinatenachsen sind einstellbar: auf der Abszisse wird die Grenze durch ein kalibrierbares Drehzahl- oder n-Limit festgelegt, auf der Ordinate durch ein kalibrierbares Drehmoment- oder M-Limit (Figur 2). Der Wert des einzelnen Limits hängt von dem Kraftfahrzeugtyp ab, für den das Getriebe vorgesehen ist, und von der jeweiligen Motorstärke. Bei einem realisierten Getriebe hat das M-Limit einen Wert von 200 Nm und das n-Limit einen Wert von 1500 $U^{-1}$ (= U/min). Ein den Bereich 23 abschließender Maximalwert der Drehmomentanforderung beträgt 270 Nm, ein den Betrag der Drehzahldifferenz begrenzender Maximalwert 2700 $U^{-1}$.

Bei dem Kennfeld 24 werden die Bereiche 25 und 26 auf der Abszisse ebenfalls durch das kalibrierbare n-Limit und auf der Ordinate durch kalibrierbares Fahrpedal(stellungs)- oder FP-Limit abgegrenzt. Ein realisierter Wert beträgt 80% der maximalen FP-Auslenkung. Die maximale Fahrpedalauslenkung beträgt definitionsgemäß 100%.

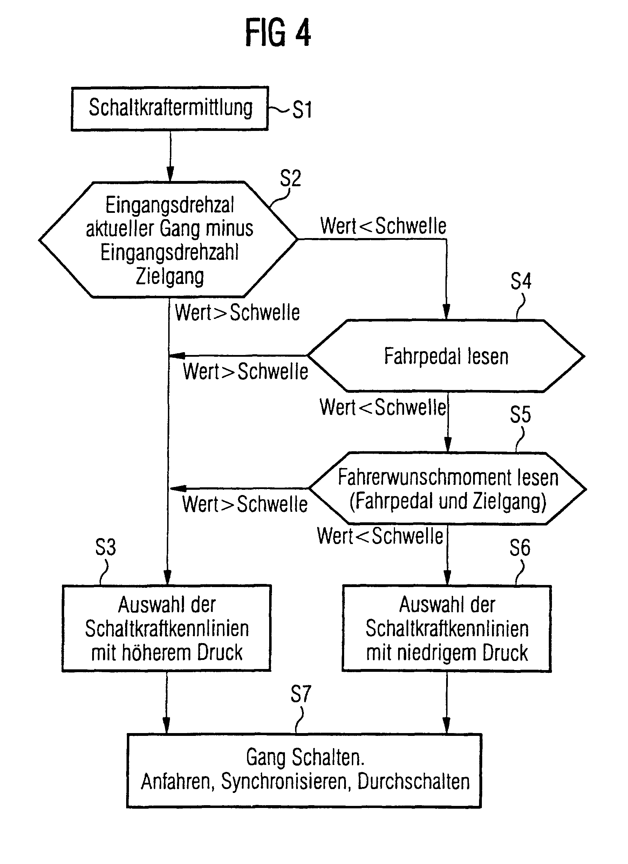

Die Getriebesteuerung 2 arbeitet ein Programm ab, das folgende Programmschritte S1 bis S7 (Figur 4) einschließt:

S1:    Beginn der Schaltkraftermittlung.

S2:    Es wird die Differenz zwischen der Getriebeeingangsdrehzahl in dem aktuellen Gang und der Getriebeeingangsdrehzahl in dem Zielgang berechnet. Die Differenz wird mit einem vorgegebenen Schwellwert verglichen. Liegt die Differenz über dem Schwellwert, erfolgt ein Sprung zu einem Schritt S3. Liegt sie unter dem Schwellwert, erfolgt ein Sprung zu einem Schritt S4.

S3:    Es wird der Bereich 24 mit den Kennlinien für höhere Schaltkräfte ausgewählt. Danach erfolgt ein Sprung zu einem Schritt S7.

S4:    Es wird die Fahrpedalstellung erfasst und mit einem vorgegeben Schwellwert verglichen. Liegt sie über dem Schwellwert, so erfolgt ein Sprung zu dem Schritt S3. Liegt sie unter dem Schwellwert, so erfolgt ein Sprung zu einem Schritt S5.

S5:    Es wird das Fahrerwunschmoment (anhand der Fahrpedalstellung und des von der Getriebesteuerung 2 vorgegebenen Zielgangs) erfasst und mit einem vorgegebenen Schwellwert verglichen. Liegt es über dem Schwellwert, so erfolgt ein Sprung zu dem Schritt S3. Liegt es unter dem Schwellwert, so erfolgt ein Sprung zu einem Schritt S6.

S6:    Es wird der Bereich mit den Kennlinien für niedrigere Schaltkräfte ausgewählt. Danach erfolgt ein Sprung zu dem Schritt S7.

S7:    Es wird in den neuen Gang oder Zielgang geschaltet, angefahren, synchronisiert und schließlich durchgeschaltet. Damit ist ein Programmzyklus beendet.

Die von der Getriebesteuerung 2 anhand der Kennfelder 22 und 24 gesteuerten Kräfte sind variabel, sie werden abhängig von der Fahrsituation mit zwei oder drei Parametern kalibriert. Kriterium ist dabei die Vorgabe, dass zum Beispiel bei einer schnellen Rückschaltung der Aktuator 16 eine Maximalkraft von 500 N aufbringt. Fordert der Fahrer keine Leistung an, so bringt der Aktuator nur eine Kraft von 200 N auf. Die Kräfte stellen Kraftverläufe über der Zeit dar, die für die Vorgänge Anfahren, Synchronisieren und Durchschalten getrennt einstellbar sind.

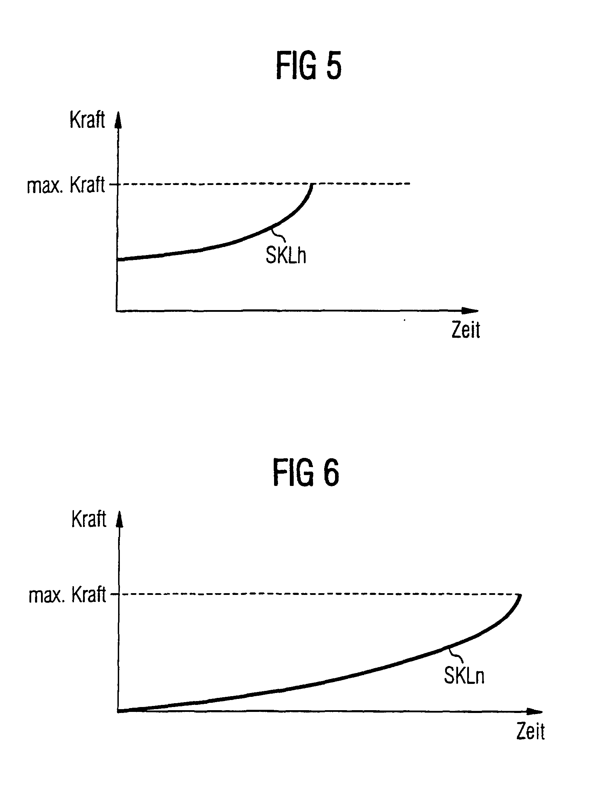

Die in dem Kennfeldspeicher 3 abgelegten Schaltkraftkennlinien unterscheiden sich durch den unterschiedlichen Kraftverlauf. Aus Figur 5 ist eine Kennlinie SKLh mit einem höheren Kraftverlauf ersichtlich, mit der die Maximalkraft des Aktuators 16 in kurzer Zeit erreicht wird. Diese Kraft-Zeit-Kennlinie entspricht dem Bereich 23 bzw. 26 der Figuren 2 und 3.

Aus Figur 6 ist eine Kennlinie mit einem niedrigeren Kraftverlauf SKLn ersichtlich, mit der es länger dauert, bis die Maximalkraft des Aktuators 16 erreicht wird. Diese Kraft-Zeit-Kennlinie entspricht dem Bereich 22 bzw. 25 der Figuren 2 und 3.

Aus diesen Schaltkraftkennlinien des Kennfeldspeichers 3 werden mit der Kolbenfläche des hydraulischen Aktuators 16 zugehörige Druckwerte berechnet. Das Druckregelventil 14 wird dann derart bestromt, dass es diese Druckwerte einstellt.

Die Kraft-Zeit-Kennlinien sind in dem Kennfeldspeicher 3 in Form von Datenfeldern (arrays) abgelegt, die über einen Index angesprochen werden. Sie enthalten eine Anzahl von Kraft-Zeit-Wertepaaren, zwischen denen linear interpoliert wird. Eine derartige Kennlinie hat also folgende Gestalt:

| 0 | 1 | 2 | Index_x | 24 |
|---|---|---|---------|-----|
| 0 ms 300 N | 8 ms 340 N | 16 ms 400 N | Zeitpunkt_x Kraft_x | 1000 ms 600 N |

Die Zeitintervalle müssen nicht gleich lang sein, sie können in Anpassung an den Einzelfall unterschiedlich lang gewählt werden.

Nachfolgend werden Daten von realisierten Schaltkraftverläufen wiedergegeben.

Beispiel für Schaltkraftkennlinien mit einem "niedrigen" Schaltkraftverlauf:

$$SKLn =$$

$$(0,50,100,150,200,250,250,250,250,250,250,250,250,250,$$

$$250,250,250,250,250,250,250,250,400,550)$$

Beispiel für Schaltkraftkennlinien mit einem "hohen" Schaltkraftverlauf:

$$SKLh =$$

$$(550,550,550,550,550,550,550,550,550,550,550,550,550,550,$$

$$550,550,550,550,550,550,550,550,550,550,550)$$

Die Kennlinien unterscheiden sich im wesentlichen durch den zeitlichen Verlauf, d.h. bei einem niedrigem Schaltkraftverlauf wird die Schaltkraft nur langsam erhöht, bei einem höherem Schaltkraftverlauf dagegen schnell. In obigem Beispiel wird mit der maximal zulässigen Schaltkraft von 550 N gearbeitet. Diese Grenze errechnet sich aus dem maximal zulässigen Drehmoment an der Schaltwelle von 16,5 Nm (bei einem gängigen Kraftfahrzeugtyp der unteren Mittelklasse). Der Wert ist abhängig von der Auslegung des Getriebes (Schaltstangen, Synchronringe, Schiebemuffen).

Auch bei dem niedrigen Schaltkraftverlauf kann die maximal zulässige Kraft als einer der letzten Werte auftreten.

Mit zunehmender Zeit bewegt sich der Aktuator 16. Bei kleinen Zeiten (0 bis 20 oder 30 ms) werden niedrige Kräfte aus der Kennlinie ausgelesen. Bewegt sich der Aktuator nur schwer, so dauert es lange, bis seine Zielposition erreicht wird. Ab einer Zeitdauer von 20 oder 30 ms wird deshalb die Kraft erhöht, um sicherzustellen, daß die Zielposition erreicht wird. Der letzte Wert wird dabei für die restliche Zeit beibehalten.

Wird die Zielposition nicht erreicht, so wird der Schaltvorgang (nach 1000 ms) abgebrochen.

Es gibt keinen allgemein gültigen Wertebereich für die niedrigen und hohen Schaltkräfte. Die Abstimmung erfolgt für den jeweiligen Kraftfahrzeugtyp nach dem subjektivem Eindruck beim Fahren, je nachdem wann Schaltschläge und störende Geräusche erkennbar werden.

**Patentansprüche**

1. Kraftfahrzeuggetriebe (1) mit einer Getriebesteuerung (2), mit der die Schaltvorgänge des Getriebes gesteuert werden und mit einem Aktuator (16), der von der Getriebesteuerung (2) mit variabler Kraft gesteuert wird und durch den jeweils ein von der Getriebesteuerung festgelegter Getriebegang eingelegt wird, wobei die Kraft des Aktuators von Betriebszuständen des Kraftfahrzeugs abhängt und die Getriebesteuerung (2) mit einer programmgesteuerten Umschalteinrichtung (4) versehen ist, durch die anhand eines Kennfeldes, das zwei Wertebereiche (22, 23) von Betriebszuständen aufweist, umgeschaltet wird zwischen Schaltkraftkennlinien (SKLn) mit niedrigen Schaltkräften zum Betätigen des Aktuators (16) und Schaltkraftkennlinien (SKLh) mit höheren Schaltkräften zum Betätigen des Aktuators (16), **dadurch gekennzeichnet, dass** die Schaltkraftkennlinien als Kraft-Zeit-Kennlinien abgelegt sind und die Schaltkraftkennlinien mit einem niedrigen Schaltkraftverlauf (SKLn) und die Schaltkraftkennlinien mit einem hohen Schaltkraftverlauf (SKLh) sich durch ihren zeitlichen Verlauf unterscheiden.

2. Kraftfahrzeuggetriebe nach Anspruch 1, **dadurch gekennzeichnet, dass** die Umschaltung zwischen den Schaltkraftkennlinien (SKLh, SKLn) anhand eines Kennfelds (21) abhängig von der Motordrehzahl ($n_{mot}$) erfolgt.

3. Kraftfahrzeuggetriebe nach Anspruch 1, **dadurch gekennzeichnet, dass** die Umschaltung zwischen den Schaltkraftkennlinien (SKLh, SKLn) anhand eines Kennfelds (24) abhängig von der Fahrpedalstellung (FP) erfolgt.

4. Kraftfahrzeuggetriebe nach Anspruch 1, **dadurch gekennzeichnet, dass** in einem Kennfeld (21) Grenzwerte für ein von einem Fahrer vorgegebenes Drehmoment (M-Limit) einstellbar sind, durch die der Übergang zwischen den Schaltkraftkennlinien (SKLn, SKLh) festgelegt wird.

5. Kraftfahrzeuggetriebe nach Anspruch 1, **dadurch gekennzeichnet, dass** in einem Kennfeld (24) Grenzwerte für eine Fahrpedalstellung (FP-Limit) einstellbar sind, durch die der Übergang zwischen den Schaltkraftkennlinien (SKLn, SKLh) festgelegt wird.

6. Kraftfahrzeuggetriebe nach Anspruch 1, **dadurch gekennzeichnet, dass** in einem Kennfeld (21, 24) Grenzwerte für eine Motordrehzahldifferenz (n-Limit) einstellbar sind, durch die der Übergang zwischen den Schaltkraftkennlinien (SKLn, SKLh) festgelegt wird.

7. Kraftfahrzeuggetriebe nach Anspruch 1, **dadurch gekennzeichnet, dass** die Getriebesteuerung (2) einen Kennfeldspeicher (3) aufweist, in dem die Schaltkraftkennlinien als Kraft-Zeit-Kennlinien in Form von Datenfeldern abgelegt sind, die über einen Index angesprochen werden.

**Claims**

1. Motor vehicle gearbox (1) having a gearbox control unit (2) with which the gear-shifting operations are controlled and having an actuator (16) which is controlled by the gearbox control unit (2) with variable force and by means of which a gear specified by the gearbox control unit is engaged, the force of the actuator being dependent on operating states of the motor vehicle and the gearbox control unit (2) being provided with a program-controlled changeover device (4) for switching, on the basis of an engine characteristics map having two operating state value ranges (22, 23), between shift force characteristics (SKLn) with low shift forces for operating the actuator (16) and shift force characteristics (SKLh) with high shift forces for operating the actuator (16), **characterized in that** the shift force characteristics are stored as force/time characteristics and the shift force characteristics with a low shift force behaviour (SKLn) and the shift force characteristics with a high shift force behaviour (SKLh) differ in respect of their time response.

2. Motor vehicle gearbox according to Claim 1, **characterized in that** the changeover between the shift force characteristics (SKLh, SKLn) takes place on the basis of an engine characteristic map (21) as a function of the engine speed ($n_{mot}$).

**3.** Motor vehicle gearbox according to Claim 1, **characterized in that** the changeover between the shift force characteristics (SKLh, SKLn) takes place on the basis of an engine characteristic map (24) as a function of the accelerator pedal setting (FP).

**4.** Motor vehicle gearbox according to Claim 1, **characterized in that** limit values for a driver-specified torque (M-Limit) are settable in an engine characteristic map (21) and determine the transition between the shift force characteristics (SKLn, SKLh).

**5.** Motor vehicle gearbox according to Claim 1, **characterized in that** limit values for an accelerator pedal setting (FP-Limit) are settable in an engine characteristic map (24) and determine the transition between the shift force characteristics (SKLn, SKLh).

**6.** Motor vehicle gearbox according to Claim 1, **characterized in that** limit values for an engine speed difference (n-Limit) are settable in an engine characteristic map (21, 24) and define the transition between the shift force characteristics (SKLn, SKLh).

**7.** Motor vehicle gearbox according to Claim 1, **characterized in that** the gearbox control unit (2) has an engine characteristic map (3) in which the shift force characteristics are stored as force/time characteristics in the form of data fields which are addressed via an index.

## Revendications

**1.** Transmission d'automobile (1) comportant une commande de transmission (2) avec laquelle les opérations d'enclenchement de la transmission sont commandées et un actionneur (16), qui est commandé avec une force variable par la commande de transmission (2) et par lequel un rapport de la boîte de vitesses fixé par la commande de transmission est engagé, dans laquelle la force de l'actionneur dépend d'états de marche du véhicule et la commande de transmission (2) est pourvue d'un dispositif de changement de vitesse (4) commandé par un programme, avec lequel on change de vitesse à l'aide d'un champ caractéristique, qui présente deux zones de valeurs (22, 23) d'états de marche, entre des courbes caractéristiques de force d'enclenchement (SKLn) avec des forces d'enclenchement faibles pour actionner l'actionneur (16) et des courbes caractéristiques de force d'enclenchement (SKLh) avec des forces d'enclenchement plus élevées pour actionner l'actionneur (16), **caractérisée en ce que** les courbes caractéristiques de force d'enclenchement sont stockées sous forme de courbes caractéristiques force-temps et les courbes caractéristiques de force d'enclenchement avec un faible gradient de force d'enclenchement (SKLn) et les courbes caractéristiques de force d'enclenchement avec un gradient de force d'enclenchement élevé (SKLh) se différencient par leur gradient en fonction du temps.

**2.** Transmission d'automobile selon la revendication 1, **caractérisée en ce que** le changement de vitesse entre les courbes caractéristiques de force d'enclenchement (SKLh, SKLn) à l'aide d'un champ caractéristique (21) est effectué en fonction du régime du moteur ($n_{mot}$).

**3.** Transmission d'automobile selon la revendication 1, **caractérisée en ce que** le changement de vitesse entre les courbes caractéristiques de force d'enclenchement (SKLh, SKLn) à l'aide d'un champ caractéristique (24) est effectué en fonction de la position de la pédale d'accélérateur (FP).

**4.** Transmission d'automobile selon la revendication 1, **caractérisée en ce que** des valeurs limites pour un couple (limite M) prédéterminé par le conducteur sont réglables dans un champ caractéristique (21), valeurs par lesquelles la transition entre les courbes caractéristiques de force d'enclenchement (SKLn, SKLh) est fixée.

**5.** Transmission d'automobile selon la revendication 1, **caractérisée en ce que** des valeurs limites pour une position de la pédale d'accélérateur (limite FP) sont réglables dans un champ caractéristique (24), valeurs par lesquelles la transition entre les courbes caractéristiques de force d'enclenchement (SKLn, SKLh) est fixée.

**6.** Transmission d'automobile selon la revendication 1, **caractérisée en ce que** des valeurs limites pour une différence de régime du moteur (limite n) sont réglables dans un champ caractéristique (21, 24), valeurs par lesquelles la transition entre les courbes caractéristiques de force d'enclenchement (SKLn, SKLh) est fixée.

**7.** Transmission d'automobile selon la revendication 1, **caractérisée en ce que** la commande de transmission (2) présente une mémoire de champs caractéristiques (3), dans laquelle les courbes caractéristiques de force d'enclenchement sous forme de courbes caractéristiques force-temps sont stockées sous la forme de champs de données, qui sont accessibles par l'intermédiaire d'un index.

## FIG 1

EP 1 238 215 B1

**FIG 2**

Torque Request

Max 270 — | 21 | 23 |

Select High Shift Forces

Calibrierbares
M-Limit →

Select Low
Shift Forces — 22

Calibrierbares n-Limit

Betrag Delta $n_{mot}$

**FIG 3**

Fahrpedal

Max 100% — | 24 | 26 |

Select High Shift Forces

Calibrierbares
FP-Limit →

Select Low
Shift Forces — 25

Calibrierbares n-Limit

Betrag Delta $n_{mot}$

# FIG 4

Schaltkraftermittlung — S1

Eingangsdrehzal aktueller Gang minus Eingangsdrehzahl Zielgang — S2

Wert < Schwelle

Wert > Schwelle

Fahrpedal lesen — S4

Wert > Schwelle

Wert < Schwelle

Fahrerwunschmoment lesen (Fahrpedal und Zielgang) — S5

Wert > Schwelle

Wert < Schwelle

S3

Auswahl der Schaltkraftkennlinien mit höherem Druck

S6

Auswahl der Schaltkraftkennlinien mit niedrigem Druck

S7

Gang Schalten. Anfahren, Synchronisieren, Durchschalten

# FIG 5

# FIG 6